# EUROPÄISCHE PATENTSCHRIFT

(11) **EP 2 285 849 B1**
(45) Veröffentlichungstag und Bekanntmachung des Hinweises auf die Patenterteilung: **18.06.2014**
(21) Anmeldenummer: 09753737.7
(22) Anmeldetag: 14.04.2009
(51) Int. Cl.: C08L 53/00, C09K 3/10, C08F 293/00, C09J 153/00

(54) **SILYL-FUNKTIONALISIERTE ABA-TRIBLOCKCOPOLYMERE AUF (METH)ACRYLATBASIS UND VERFAHREN ZU IHRER HERSTELLUNG**
SILYL-FUNCTIONALIZED ABA TRIBLOCK COPOLYMERS ON THE BASIS OF (METH)ACRYLATE AND PROCESS FOR THEIR PRODUCTION
COPOLYMÈRES TRIBLOCS ABA À BASE DE (MÉTH)ACRYLATE À FONCTIONNALISATION SILYLE ET PROCÉDÉ POUR LEURS PRODUCTION

(30) Priorität: 28.05.2008 DE 102008002016
(43) Veröffentlichungstag der Anmeldung: 23.02.2011
(73) Patentinhaber: Henkel AG & Co. KGaA, 40589 Düsseldorf (DE)
(72) Erfinder: BALK, Sven, 60594 Frankfurt (DE); LÖHDEN, Gerd, 45136 Essen (DE); KAUTZ, Holger, 45721 Haltern am See (DE); TRÖMER, Christine, 63546 Hammersbach (DE); MÄRZ, Monika, 63755 Alzenau (DE); ZANDER, Lars, 41569 Rommerskirchen (DE); LÜCKERT, Jens, 69256 Mauer (DE); KLEIN, Johann, 40593 Düsseldorf (DE); MÖLLER, Thomas, 40593 Düsseldorf (DE)
(86) Internationale Anmeldenummer: PCT/EP2009/054364
(87) Internationale Veröffentlichungsnummer: WO 2009/144082

(56) Entgegenhaltungen:
- WO-A-2008/021500
- WO-A-2009/033974
- DE-A1-102005 045 458
- US-A1- 2004 147 674
- DATABASE COMPENDEX [Online] ENGINEERING INFORMATION, INC., NEW YORK, NY, US; 2007, MASAOKA Y ET AL: "New durable sealant of telechelic polyacrylate" XP002536884 Database accession no. E20084611699092 & ASTM SPECIAL TECHNICAL PUBLICATION - DURABILITY OF BUILDING AND CONSTRUCTION SEALANTS AND ADHESIVES: 2ND SYMPOSIUM 2007 AMERICAN SOCIETY FOR TESTING AND MATERIALS US, Bd. 1488 STP, 15. Juni 2005 (2005-06-15), Seiten 31-39,

## Beschreibung

Die Erfindung betrifft ein Verfahren zur Herstellung von ABA-Triblockcopolymeren auf (Meth)acrylatbasis mit einer Silylfunktionalisierung der A-Blöcke und deren Verwendung zum Beispiel als Bindemittel in Klebstoffen oder Dichtmassen.

Maßgeschneiderte Copolymere mit definierter Zusammensetzung, Kettenlänge, Molmassenverteilung usw. sind ein breites Forschungsfeld. Man unterscheidet unter anderem zwischen Gradienten- und Blockpolymeren. Für solche Materialien sind verschiedene Anwendungen denkbar. Im Folgenden sollen einige davon kurz vorgestellt werden.

Blockpolymere haben einen sprunghaften Übergang zwischen den Monomeren in der Polymerkette, der als Grenze zwischen den einzelnen Blöcken definiert ist. Ein übliches Syntheseverfahren für AB-Blockpolymere ist die kontrollierte Polymerisation von Monomer A und zu einem späteren Zeitpunkt die Zugabe von Monomer B. Neben der sequentiellen Polymerisation durch chargenweise Zugabe in das Reaktionsgefäß kann ein ähnliches Ergebnis auch dadurch erzielt werden, dass man bei einer kontinuierlichen Zugabe der beiden Monomere deren Zusammensetzungen zu bestimmten Zeitpunkten sprunghaft ändert. In diesem Fall erhält man ein Gradientcopolymer.

Als lebende bzw. kontrollierte Polymerisationsmethoden eignen sich neben der anionischen oder der Gruppentransfer-Polymerisation auch moderne Methoden der kontrollierten radikalischen Polymerisation wie z.B. die RAFT-Polymerisation. Der Mechanismus der RAFT-Polymerisation wird in WO 98/01478 bzw. EP 0 910 587 näher beschrieben. Anwendungsbeispiele finden sich in EP1 205 492.

Mit einer neuen Art der Polymerisation ist man dem Ziel maßgeschneiderter Polymere ein gutes Stück näher gekommen. Die ATRP-Methode (atom transfer radical polymerization) wurde in den 1990-er Jahren maßgeblich von Prof. Matyjaszewski entwickelt (Matyjaszewski et al., J.Am.Chem.Soc., 1995, 117, S.5614; WO 97/18247; Science, 1996, 272, S.866). Die ATRP liefert engverteilte (Homo)Polymere im Molmassenbereich von Mₙ=10.000-120.000 g/mol. Ein besonderer Vorteil dabei ist, dass sowohl das Molekulargewicht als auch die Molekulargewichtsverteilung regelbar sind. Als lebende Polymerisation gestattet sie ferner den gezielten Aufbau von Polymerarchitekturen wie beispielsweise statistische Copolymere oder auch Block-Copolymer-Strukturen. Durch entsprechende Initiatoren sind z.B. zusätzlich ungewöhnliche BlockCopolymere und Sternpolymere zugänglich. Theoretische Grundlagen zum Polymerisationsmechanismus sind unter anderem in Hans Georg Elias, Makromoleküle, Band 1, 6.Auflage, Weinheim 1999, S.344 erläutert.

Kontrolliert radikalische Methoden eignen sich insbesondere auch zur gezielten Funktionalisierung von Vinylpolymeren. Besonderes Interesse kommt dabei unter anderem Silylfunktionen zu. Insbesondere von Interesse sind Funktionalisierungen an den Kettenenden (so genannte Telechele) bzw. in der Nähe der Kettenenden.

Alle diese beschriebenen Polymere werden entweder über ionische Polymerisationsverfahren oder durch Polykondensation bzw. -addition hergestellt. In diesen Verfahren ist die Darstellung endgruppenfunktionalisierter Produkte unproblematisch. Im Gegensatz dazu ist die gezielte Funktionalisierung am Kettenende bei der radikalischen Polymerisation nahezu unmöglich. Somit spielen Polystyrole oder Polymethacrylat bis dato in Bezug auf Anwendungen als Dichtmassenformulierungsbestandteile nur eine untergeordnete Rolle. Eine Möglichkeit entsprechende Produkte darzustellen ist jedoch mit der Entwicklung kontrolliert-radikalischer Polymerisationsmethoden wie z.B. der ATRP hinzugekommen. Somit sind auch diese Monomere zum Aufbau entsprechender Polymerarchitekturen inzwischen verfügbar.

Eine bereits etablierte Methode, silyl-telechele Polymere - d.h. Polymere mit Silylgruppen, die sich genau an den beiden Kettenenden befinden - herzustellen, ist die Endgruppenfunktionalisierung eines Poly(meth)acrylats mit olefinischen Gruppen und die anschließende Hydrosilylierung dieser Gruppen.

Eine Möglichkeit, mittels ATRP synthetisierte Poly(meth)acrylate an den Endgruppen olefinisch zu funktionalisieren wird in US 2005/0113543 beschrieben. Nachteile dieses Verfahrens, in dem eine olefinische Gruppe durch einen ungesättigten Initiator und die andere durch eine Substitution des halogenierten Kettenendes mit Organozinnverbindungen unter Übertragung einer Allylgruppe eingeführt werden, sind die zwangsläufige Mehrstufigkeit des Verfahrens, der Einsatz toxikologisch bedenklicher Zinnverbindungen und eine monofunktionelle Initiierung, die die Synthese symmetrischer erfindungsgemäßer ABA-Triblockcopolymere ausschließt.

Die Anwendung eines einstufigen Prozesses zur Synthese olefinisch terminierter Poly(meth)acrylate wird in EP 1 085 027 beschrieben. Durch Zugabe nicht konjugierter Diene zu einer mit einem bifunktionellen ATRP-Intiator gestarteten Polymerisationslösung, wird die Polymerisation abgebrochen und das Produkt terminiert. Genauer beschrieben wird die Methode in EP 1 024 153 und EP 1 153 942. In diesen Schriften wird auch die Verwendung der Materialien als Zwischenstufe zu einer weiteren Umsetzung zu silyl-terminierten Produkten umschrieben. Eine analoge Reaktion, bei der die Hydrosilylierung und die Vernetzung simultan durchgeführt werden, findet sich in EP 1 277 804. In allen diesen Beschreibungen werden ausschließlich rein terminierte Produkte vorgeschlagen. Keines der beschriebenen Polymere weist dabei eine Blockstruktur auf. In EP 1 158 006 werden die beschriebenen Konzepte zur Terminierung in mehrfacher Hinsicht erweitert: Zum einen wird die Gruppe der zur Terminierung geeigneten Reagenzien um cyclische Diene wie z.B. Cyclooctadiene erweitert. In dieser Ergänzung ist jedoch keine Erweiterung der Polymerarchitektur zu sehen.

Ein großer Nachteil dieser Produkte gegenüber den erfindungsgemäßen ist der zweistufige Herstellungsprozess. Während durch die erfindungsgemäße Copolymerisation silyl-funktioneller Monomere ein einfacher, einstufiger Prozess zur Verfügung gestellt wird, ist die beschriebene polymeranaloge Umsetzung nicht nur zweistufig, sondern es muss zusätzlich zwischen der eigentlichen Polymerisation und der Hydrosilylierung eine aufwendige Produktreinigung durchgeführt werden. Diese muss äußerst gründlich sein, da sowohl Übergangsmetalle - z.B. aus dem ATRP-Verfahren - als auch insbesondere die in diesem Verfahren verwendeten mehrwertigen, zumeist aminischen Liganden deaktivierend auf die Hydrosilylierungskatalysatoren wie z.B. den Karstedt-Katalysator wirken. Der daraus resultierende mehrstufige Prozess ist verglichen zu dem erfindungsgemäßen einstufigen Prozess ökonomisch und ökologisch klar von Nachteil.

Ein weiterer Nachteil dieser Produkte gegenüber Polymeren mit mehrfach funktionalisierten, kurzen Außenblöcken ist die höhere Wahrscheinlichkeit, einseitig nicht funktionalisierte Produkte zu erhalten.

Durch den gegenüber den erfindungsgemäßen Polymeren jeweils resultierenden geringeren Funktionalisierungsgrad erhält man für weitere Folgereaktionen wie zum Beispiel im Aushärtprozess von Dichtmassenformulierungen einen niedrigeren Vernetzungsgrad, der der mechanischen Stabilität und chemischen Beständigkeit der Dichtung bzw. der Klebschicht entgegenwirkt.

Eine alternative Darstellung silyl-terminierter Produkte wird in EP 0 976 766 und in EP 1 059 308 beschrieben. Hier wird in einer zweiten Prozessstufe eine Endgruppenfunktionalisierung durchgeführt. Neben den bereits beschriebenen Nachteilen telecheler Polymere gegenüber den erfindungsgemäßen Blockcopolymeren ist dieses Verfahren ineffizient. Dem Fachmann wird leicht ersichtlich, dass die hier beschriebenen Umsetzungen nur zu einer geringen Funktionalisierung führen können.

In EP 1 179 567 und EP 1 197 498 werden dreistufige Verfahren zur Synthese entsprechender Silyltelecheler beschrieben. Durch Substitution der endständigen Halogenatome mit Oxyanionen werden olefinische Gruppen an den Kettenenden eingeführt. Diese werden schließlich in einem dritten Prozessschritt hydrosilyliert.

Nachteil von freiradikalisch hergestellten Bindemitteln dieser Art wäre eine statistische Verteilung der funktionellen Gruppen in der Polymerkette. Dies führt zu einer engmaschigen Vernetzung und einer somit verminderten Elastizität der Dichtmasse. Daraus kann auch eine Verschlechterung der Substratbindung resultieren.

Polymere, die durch einen freiradikalischen Polymerisationsprozess gewonnen werden, zeigen oft Molekularitätsindizes von deutlich über 1,6. Es liegen bei einer solchen Molekulargewichtsverteilung also zwangsläufig sehr kurzkettige und extrem langekettige Polymere im Gesamtprodukt vor. Die kurzkettigen Nebenprodukte können die chemische Beständigkeit des Produktes beeinträchtigen. Langkettige Nebenprodukte führen dagegen zu einer überproportionalen Viskositätszunahme der Polymerschmelze bzw. -lösung. Dieser Effekt wird durch die u.U. als Weichmacher wirksamen niedermolekularen Ketten einer breiten Verteilung keinesfalls ausgeglichen. Diese Nachteile freiradikalisch polymerisierter, (Meth)acrylat-basierter Bindemittel können insofern gelöst werden, dass durch Anwendung einer kontrollierten Polymerisationsmethode, in Form der atom transfer radical polymerisation, Bindemittel mit sehr engen Molekulargewichtsverteilungen zur Verfügung gestellt werden können, die durch den gegenüber freiradikalisch polymerisiert (Meth)acrylaten einen nur geringen Anteil hochmolekularer Bestandteile aufweisen. Diese Bestandteile bewirken in Polymermischungen insbesondere eine Erhöhung der Viskosität.

Neben Telechelen und Blockstrukturen stellen auch ATRP-synthestisierte Silylhaltige (Meth)acrylatcopolymere mit einer statistischen Verteilung und einer engen Molekulargewichtsverteilung eine Alternative dar. Nachteil solcher Bindemittel gegenüber den erfindungsgemäßen Polymeren ist eine engmaschige Vernetzung, die für z.B. Beschichtungssysteme durchaus von Vorteil sind, bei der Formulierung in Dichtmassen oder Klebstoffen jedoch zu einer Versprödung des Endproduktes und damit zu einer höheren Alterungsempfindlichkeit führen können.

Neben der ATRP kommen zur Synthese funktionalisierter Polymerarchitekuren auch andere Methoden zum Einsatz. Die beiden relevanten Methoden sollen im Folgenden kurz beschrieben werden. Dabei wird eine Abgrenzung von der vorliegenden Erfindung bezüglich der Produkte und auch der Methodik erfolgen. Insbesondere die Vorteile der ATRP gegenüber anderen Verfahren werden dabei herausgestellt:
In DE 38 32 466 wird unter anderem die Herstellung von P(AMA)-(MMA)-(AMA)-Triblockcopolymeren mittels Gruppentransferpolymerisation (GTP) beschrieben. Bei den in der Patentschrift beschriebenen Materialien ist dem Fachmann jedoch leicht ersichtlich, dass diese Polymere leicht zu vorzeitigen Vernetzungsreaktionen neigen und somit auch unter Stabilisierung nicht lagerstabil sein können. Außerdem muss zur Erlangung silylfunktioa nalisierter Polymer in einem weiteren Schritt eine Hydrosilylierung durchgeführt werden. Die direkte Synthese silylfunktionalisierter Polymethacrylate über die GTP ist nicht literaturbekannt.

### Aufgabe

Eine neue Stufe der Entwicklung sind die im Folgenden beschriebenen Triblockcopolymere.

ABA-Triblockcopolymere sind mit 5-Blockcopolymeren der Zusammensetzung ACBCA bzw. CABAC gleichzusetzen.

Aufgabe war es, Triblockpolymere der Struktur ABA darzustellen. Insbesondere besteht der Bedarf an silyl-terminierten Poly(meth)acrylaten bzw. Poly(meth)acrylaten, die in Ihren Eigenschaften silyl-terminierten Materialien entsprechen oder sehr nahe kommen. Dies kann zum Beispiel durch den Einbau einer bis weniger Bausteinen mit nicht oder nur wenig polymerisationsaktiven Silylgruppen am Kettenende erreicht werden. Mit Kettenenden wird das Endsegment eines Polymers bezeichnet, das max. 1-20 Gew.-% des Gesamtgewichtes des Polymeren ausmacht.

Poly(meth)acrylate, die silyl-funktionelle Kettenenden führen bzw. silylterminierte Poly(meth)acrylate eignen sich als Präpolymere für feuchtigkeitshärtende Formulierungen z.B. in Kleb- oder Dichtstoffanwendungen.

Eine weitere Aufgabe der Erfindung ist es, reaktive Silyl-Funktionalitäten enthaltene Polymere als Bindemittel derart zur Verfügung zu stellen, dass die Zahl der Silylgruppen im Polymer, unter guter Verfügbarkeit für die Aushärtungsreaktion, möglichst gering gehalten wird.

Ein weiterer Gegenstand dieser Erfindung ist die Funktionalisierung von kurzen A-Blöcken in ABA-Triblockcopolymeren durch den Einbau geeigneter ungesättigter Monomere, die eine zusätzliche Silyl-Funktionalität aufweisen, während der letzten Stufe einer sequentiellen Polymerisation.

Eine weitere Aufgabe ist es, ein Material mit einer möglichst engen Molekulargewichtsverteilung unter 1,6, bevorzugt unter 1,4, zur Verfügung zu stellen. Auf diese Weise werden sowohl die Anteile höhermolekularer Bestandteile, die u.a. zu einer ungewünschten Erhöhung der Lösungs- bzw. Schmelzviskosität beitragen, als auch die Anteile besonders niedermolekularer Bestandteile, die eine Verschlechterung der Lösungsmittelbeständigkeit des Bindemittels hervorrufen können, minimiert.

Aufgabe der vorliegenden Erfindung ist es daher unter anderem ein Bindemittel für Dichtmassen zur Verfügung zu stellen, das entweder silyl-terminiert ist oder aber eine geringe Anzahl freier Silylgruppen in der Nähe der Kettenenden aufweist. Solche Materialien weisen bei der Formulierung in Dichtmassen eine höhere Elastizität auf. Daraus resultiert auch eine Verbesserung der Haftung auf dem Substrat.

Ene weitere Aufgabe war es, ein Bindemittel zur Verfügung zu stellen, mit dem eine eventuelle vorzeitige Vergelung zu verhindern.

### Lösung

Die Aufgabe wurde gelöst durch das zur Verfügung Stellen von Blockcopolymeren der Zusammensetzung ABA mit mindestens 1 und maximal 4 Silylgruppen in den einzelnen A-Blöcken, dadurch gekennzeichnet, dass Block A, ein Copolymer enthaltend silyl-funktionalisierte (Meth)acrylate und Monomere ausgewählt aus der Gruppe der (Meth)acrylate oder deren Mischungen und ein Block B, enthaltend (Meth)acrylate oder deren Mischungen, die keine zusätzliche Silylfunktion aufweisen und deren Zusammensetzung sich von der Zusammensetzung der nicht silyl-funktionellen Monomeren aus Block A unterscheidet, als ABA-Blockcopolymerisate polymerisiert werden.

Es wurde gefunden, dass auch ABA-Blockcopolymere mit mindestens 1 und maximal 2 Silylgruppen in den einzelnen A-Blöcken dargestellt werden können.

Es können sowohl den Copolymeren des Blockes A, als auch den Copolymeren des Blockes B 0-50 Gew.-% mittels ATRP polymerisierbare Monomere, die nicht zu der Gruppe der (Meth)acrylate gezählt werden, zugegeben werden.

Eine bevorzugte Ausführungsform stellen Blockcopolymere dar, die bei einer ABA Zusammensetzung ≤4 Silylgruppen in den einzelnen A-Blöcken aufweisen und dabei der Block A ein Copolymer enthaltend silyl-funktionalisierte (Meth)acrylate und Monomere ausgewählt aus der Gruppe der (Meth)acrylate oder deren Mischungen und optional weitere mittels ATRP polymerisierbare Monomere, die nicht zu der Gruppe der (Meth)acrylate gezählt werden, und ein Block B, enthaltend (Meth)acrylate oder deren Mischungen, die keine SilylFunktion aufweisen und optional weitere mittels ATRP polymerisierbare Monomere, die nicht zu der Gruppe der (Meth)acrylate gezählt werden, als ABA-Blockcopolymerisate polymerisiert werden, wobei die mittels ATRP polymerisierbaren Monomere auch nur in Block A copolymerisiert werden oder nur in Block B copolymerisiert werden können.

Eine weitere Leistung der vorliegenden Erfindung ist es, Blockcopolymere zur Verfügung zu stellen, die gezielt an den Enden der Polymerkette funktionalisiert sind.

Gegenüber den im Stand der Technik beschriebenen Formulierungen mit silyl-terminierten Bindemitteln in der Formulierung kann auch in den erfindungsgemäßen Produkten mit einem relevant höheren Funktionalisierungsgrad der Vorteil einer besseren Vernetzbarkeit gesehen werden. Bedingt durch die höhere Zahl reaktiver Gruppen im Kettenendsegment, ist eine Reaktion der Silylgruppen wahrscheinlicher und eine Vernetzung zu einem vergleichbar engmaschigen Elastomer bzw. zu flexiblen Dichtmasse läuft deutlich schneller ab. Eine gezielte Steuerung der Vernetzungsdichte bzw. der Eigenschaften des vernetzten Endprodukts wird durch eine Verteilung der Funktionalitäten in den Endsegmenten verbessert. Zusätzlich wird durch eine Verteilung der reaktiven Gruppen auf die Endsegmente - hier die Blöcke A - eine zu engmaschige Vernetzung ausgeschlossen. Mit Endsegmenten ist ein Kettenabschnitt gemeint, der jeweils maximal 25 Massen-% und bevorzugt maximal 10 Massen-% und ganz besonders bevorzugt maximal 5 Massen-% der gesamten Polymerkette ausmacht.

Die Blockcopolymere werden mittels eines sequentiellen Polymerisationsverfahrens hergestellt. Das heißt, dass die Monomermischung zur Synthese der Blöcke beispielsweise A erst zu dem System gegeben werden, wenn die Monomermischung zur Synthese des Blocks beispielsweise B zu mindestens 90%, bevorzugt zu mindestens 95% umgesetzt worden ist. Durch dieses Verfahren wird gewährleistet, dass die B Blöcke frei von Monomeren der Zusammensetzung A sind, und dass die A Blöcke weniger als 10%, bevorzugt weniger als 5% der Gesamtmenge der Monomere der Zusammensetzung B enthalten. Die Blockgrenzen befinden sich nach dieser Definition an der jeweiligen Stelle der Kette, an der sich die erste Wiederholungseinheit der zudosierten Monomermischung - in diesem Beispiel der Mischung A - befindet.

Vorteil der vorliegenden Erfindung ist zudem eine beschränkte Zahl von Funktionalitäten in den jeweiligen funktionalisierten Polymerblöcken. Ein höherer Anteil funktioneller Gruppen im Bindemittel führt zu einer eventuellen vorzeitigen Vergelung oder zumindest zu einer zusätzlichen Erhöhung der Lösungs- bzw. Schmelzviskosität. Diese Aufgabe wurde durch die gezielte Anbringung der Funktionalitäten an das Kettenende oder in die Nähe desselbigen gelöst.

Ein weiterer Vorteil der Blockcopolymere ist die Farblosigkeit sowie die Geruchlosigkeit des hergestellten Produkts.

Die möglichen Anwendungen der erfindungsgemäßen Materialien umfassen jedoch nicht nur Bindemittel für Dichtungsmassen oder als Zwischenstufe für die Einführung andersartiger Funktionalitäten. In EP 1 510 550 ist beispielsweise eine Beschichtungszusammensetzung, die untere anderem aus Acrylatpartikeln und Polyurethanen besteht, beschrieben. Ein erfindungsgemäßes Polymer führte in einer entsprechenden Formulierung zu einer Verbesserung der Verarbeitungseigenschaften und zu einer weiteren Alternative eines Vernetzungsmechanismus. Denkbare Anwendungen wären zum Beispiel Pulverlackformulierungen.

Entscheidend zum Gelingen dieses Verfahrens ist weiterhin, dass die Silylgruppe des silyl-funktionellen Monomers unter Polymerisationsbedingungen keine bzw. nur in einem sehr geringen Maße eine vorzeitige Vernetzungsreaktion eingeht._Die zur Silylfunktionalisierung copolymerisierten Monomere zeichnen sich durch folgende allgemeine Formel aus:

H₂C=CR³C(O)O-R⁴-Si(OR¹)_{b}R²ₐX_{c}

Dabei können die organischen Resten R¹ bzw. R² jeweils identisch oder verschieden zueinander sein. Ferner sind die organischen Reste R¹ und R² ausgewählt aus der Gruppe der aliphatischen Kohlenwasserstoffreste bestehend aus 1 bis 20 Kohlenstoffatomen. Diese Gruppen können entweder linear, verzweigt oder cyclisch sein. R¹ kann dabei auch ausschließlich Wasserstoff sein.

X ist ausgewählt aus der Gruppe der hydrolisierbaren Reste, die ungleich Alkoxy bzw. Hydroxy sind. Dies umfasst unter anderem Halogen-, Acyloxy-, Amino-, Amido-, Mercapto-, Alkenyloxy- und ähnliche hydrolisierbare Gruppen.

Weiterhin sind a, b und c jeweils ganze Zahlen zwischen 0 und 3. Die Summe a+b+c ist 3.

Bei dem Rest R³ handelt es sich um Wasserstoff oder einen aliphatischen Kohlenwasserstoffreste bestehend aus 1 bis 20 Kohlenstoffatomen. Bevorzugt handelt es sich bei R³ um Wasserstoff (Acrylate) oder um eine Methylgruppe (Methacrylate).

Bei dem Rest R⁴ handelt es sich um eine zweibindige Gruppe. Bevorzugt handelt es sich bei R⁴ um zweibindige aliphatische Kohlenwasserstoffreste bestehend aus 1 bis 20 Kohlenstoffatomen. Insbesonders bevorzugt handelt es sich bei R⁴ um -CH₂-, um -(CH₂)₂- oder um -(CH₂)₃.

Als Beispiele für die Silylreste seien -SiCl₃, -SiMeCl₂, -SiMe₂Cl, -Si(OMe)₃, - SiMe(OMe)₂, -SiMe₂(OMe), -Si(OPh)₃, -SiMe(OPh)₂, -SiMe₂(OPh), -Si(OEt)₃, - SiMe(OEt)₂, -SiMe₂(OEt), -Si(OPr)₃, -SiMe(OPr)₂, -SiMe₂(OPr), -SiEt(OMe)₂, - SiEtMe(OMe), -SiEt₂(OMe), -SiPh(OMe)₂, -SiPhMe(OMe), -SiPh₂(OMe), - SiMe(OC(O)Me)₂, -SiMe₂(OC(O)Me), -SiMe(O-N=CMe₂)₂ oder -SiMe₂(O-N=CMe₂) aufgeführt. Wobei die Abkürzungen Me für Methyl-, Ph für Phenyl-, Et für Ethyl- und Pr für iso- bzw. n-Propyl- stehen.

Als Beispiele für die (Meth)acrylreste seinen H₂C=CHC(O)O-CH₂-, H₂C=CCH₃C(O)O-CH₂-, H₂C=CHC(O)O-(CH₂)₂-, H₂C=CCH₃C(O)O-(CH₂)₂-, H₂C=CHC(O)O-(CH₂)₃- bzw. H₂C=CCH₃C(O)O-(CH₂)₃- aufgeführt.

Ein kommerziell verfügbares Monomer wäre zum Beispiel Dynasylan^{®} MEMO der Firma Evonik-Degussa GmbH. Dabei handelt es sich um 3-Methacryloxypropyltrimethoxysilan.

Vorteilhaft ist, dass die zur Funktionalisierung eingesetzten Monomere polymerisiert werden, ohne dass es zu Vernetzungsreaktionen kommt.

In den ABA-Triblockcopolymeren können die B-Blöcke wiederum in sich eine CDC-Triblockstruktur aufweisen und somit wären die ABA-Triblockcopolymere mit 5-Blockcopolymeren der Zusammensetzung ACDCA gleichzusetzen. Dabei entspricht die Zusammensetzung der C-Blöcke der Zusammensetzung des nicht silyl-funktionalisierten Anteils in den A-Blöcken.

In den ABA-Triblockcopolymeren können die einzelnen A-Blöcke wiederum in sich eine CA'-Diblockstruktur aufweisen. Die Blöcke A' setzen sich wiederum zusammen aus silylfunktionalisierten (Meth)acrylaten und Monomeren ausgewählt aus der Gruppe der (Meth)acrylate oder deren Mischungen. Die Zusammensetzung der C-Blöcke unterscheidet sich von der Zusammensetzung der A'-Blöcke insofern, dass diese keine silylfunktionalisierten Monomere enthalten. Ferner sind die C-Blöcke in Bezug auf den Gewichtsanteil im gesamten Polymer - im Gegensatz zu den A- bzw. A'-Blöcken - nicht eingeschränkt. Somit wären die ABA-Triblockcopolymere mit 5-Blockcopolymeren der Zusammensetzung CA'BA'C-Pentablockcopolymeren gleichzusetzen. Dabei entspricht die Zusammensetzung der C-Blöcke der Zusammensetzung des nicht silyl-funktionalisierten Anteils in den A'-Blöcken.

Die Schreibweise (Meth)acrylat steht für die Ester der (Meth)acrylsäure und bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Zudem wurde ein Verfahren zur Herstellung von Blockcopolymeren der Zusammensetzung ABA entwickelt. Mit einer speziellen Form der lebenden Polymerisation, der Atom Transfer Radical Polymerisation (ATRP), können gut kontrollierte Zusammensetzungen, Architekturen und definierte Funktionalitäten in ein Polymeres eingebaut werden.

Es wurde gefunden, dass durch den Einsatz eines bifunktionalen Initiators und eine sequentielle Polymerisation gezielt ABA, ACDCA oder CA'BA'C-Strukturen aufgebaut werden können.

Monomere die sowohl in Block A als auch in Block B polymerisiert werden sind ausgewählt aus der Gruppe der (Meth)acrylate wie beispielsweise Alkyl(meth)acrylate von gradkettigen, verzweigten oder cycloaliphatischen Alkoholen mit 1 bis 40 C-Atomen, wie zum Beispiel Methyl(meth)acrylat, Ethyl(meth)acrylat, n-Butyl(meth)acrylat, i-Butyl(meth)acrylat, t-Butyl(meth)acrylat, Pentyl(meth)acrylat, 2-Ethylhexyl(meth)acrylat, Stearyl(meth)acrylat, Lauryl(meth)acrylat, Cyclohexyl(meth)acrylat, Isobornyl(meth)acrylat; Aryl(meth)acrylate wie zum Beispiel Benzyl(meth)acrylat oder Phenyl(meth)acrylat die jeweils unsubstituiert oder 1-4-fach substituierte Arylreste aufweisen können; andere aromatisch substituierte (Meth)acrylate wie beispielsweise Naphthyl(meth)acrylat; Mono(meth)acrylate von Ethern, Polyethylenglycolen, Polypropylenglycolen oder deren Mischungen mit 5-80 C-Atomen, wie beispielsweise Tetrahydrofurfurylmethacrylat, Methoxy(m)ethoxyethylmethacrylat, 1-Butoxypropylmethacrylat, Cyclohexyloxymethylmethacrylat, Benzyloxymethylmethacrylat, Furfurylmethacrylat, 2-Butoxyethylmethacrylat, 2-Ethoxyethylmethacrylat, Allyloxymethylmethacrylat, 1-Ethoxybutylmethacrylat, 1-Ethoxyethylmethacrylat, Ethoxymethylmethacrylat, Poly(ethylenglycol)methylether(meth)acrylat und Poly(propylenglycol)methylether(meth)acrylat.

Neben den zuvor dargelegten (Meth)acrylaten können die zu polymerisierenden Zusammensetzungen auch weitere ungesättigte Monomere aufweisen, die mit den zuvor genannten (Meth)acrylaten und mittels ATRP copolymerisierbar sind. Hierzu gehören unter anderem 1-Alkene, wie 1-Hexen, 1-Hepten, verzweigte Alkene wie beispielsweise Vinylcyclohexan, 3,3-Dimethyl-1-propen, 3-Methyl-1-diisobutylen, 4-Methyl-1-penten, Acrylnitril, Vinylester wie z.B. Vinylacetat, Styrol, substituierte Styrole mit einem Alkylsubstituenten an der Vinylgruppe, wie z.B. α-Methylstyrol und α-Ethylstyrol, substituierte Styrole mit einem oder mehreren Alkylsubstituenten am Ring wie Vinyltoluol und p-Methylstyrol, halogenierte Styrole wie beispielsweise Monochlorstyrole, Dichlorstyrole, Tribromstyrole und Tetrabromstyrole; heterocyclische Verbindungen wie 2-Vinylpyridin, 3-Vinylpyridin, 2-Methyl-5-vinylpyridin, 3-Ethyl-4-vinylpyridin, 2,3-Dimethyl-5-Vinylpyridin, Vinylpyrimidin, 9-Vinylcarbazol, 3-Vinylcarbazol, 4-Vinylcarbazol, 2-Methyl-1-vinylimidazol, Vinloxolan, Vinylfuran, Vinylthiophen, Vinylthiolan, Vinylthiazole, Vinyloxazole und Isoprenylether; Maleinsäurederivate, wie beispielsweise Maleinsäureanhydrid, Maleinimid, Methylmaleinimid und Diene wie z.B. Divinylbenzol, sowie in den A-Blöcken die jeweiligen hydroxyfunktionalisierten und/oder aminofunktionalisierten und/oder mercaptofunktionalisierten Verbindungen. Ferner können diese Copolymere auch derart hergestellt werden, dass sie eine Hydroxy- und/oder Amino- und/oder Mercaptofunktionalität in einem Substituenten aufweisen. Solche Monomere sind beispielsweise Vinylpiperidin, 1-Vinylimidazol, N-Vinylpyrrolidon, 2-Vinylpirrolidon, N-Vinylpirrolidin, 3-Vinylpyrrolidin, N-Vinylcaprolactam, N-Vinylbutyrolactam, hydrierte Vinylthiazole und hydrierte Vinyloxazole. Besonders bevorzugt werden Vinylester, Vinylether, Fumarate, Maleate, Styrole oder Acrylonitrile mit den A-Blöcken und/oder B-Blöcken copolymerisiert.

Das Verfahren kann in beliebigen halogenfreien Lösungsmitteln durchgeführt werden. Bevorzugt werden Toluol, Xylol, H₂O; Acetate, vorzugsweise Butylacetat, Ethylacetat, Propylacetat; Ketone, vorzugsweise Ethylmethylketon, Aceton; Ether; Aliphate, vorzugsweise Pentan, Hexan; Biodiesel; aber auch Weichmacher wie niedrigmolekulare Polypropylenglycole oder Phthalate.

Die Blockcopolymere der Zusammensetzung ABA werden mittels sequentieller Polymerisation dargestellt.

Neben der Lösungspolymerisation kann die ATRP auch als Emulsions-, Miniemulsions-, Mikroemulsions-, Suspension- oder Substanzpolymerisation durchgeführt werden.

Die Polymerisation kann bei Normaldruck, Unter- oder Überdruck durchgeführt werden. Auch die Polymerisationstemperatur ist unkritisch. Im Allgemeinen liegt sie jedoch im Bereich von -20°C bis 200°C, vorzugsweise von 0°C bis 130°C und besonders bevorzugt von 50°C bis 120°C.

Vorzugsweise weißt das erfindungsgemäße Polymer ein zahlenmittleres Molekulargewicht zwischen 5000 g/mol und 100000 g/mol, besonders bevorzugt zwischen 7500 g/mol und 50000 g/mol und ganz besonders bevorzugt ≤ 30000 g/mol auf.

Es wurde gefunden, dass die Molekulargewichtsverteilung unter 1,6, bevorzugt unter 1,4 und idealerweise unter 1,3 liegt.

Als bifunktionelle Initiatoren können RO₂C-CHX-(CH₂)ₙ-CHX-CO₂R, RO₂C-C(CH₃)X-(CH₂)ₙ-C(CH₃)X-CO₂R, RO₂C-CX₂-(CH₂)ₙ-CX₂-CO₂R, RC(O)-CHX-(CH₂)ₙ-CHX-C(O)R, RC(O)-C(CH₃)X-(CH₂)ₙ-C(CH)₃X-C(O)R, RC(O)-CX₂-(CH₂)ₙ-CX₂-C(O)R, XCH₂-CO₂-(CH₂)ₙ-OC(O)CH₂X, CH₃CHX-CO₂-(CH₂)ₙ-OC(O)CHXCH₃, (CH₃)₂CX-CO₂-(CH₂)ₙ-OC(O)CX(CH₃)₂, X₂CH-CO₂-(CH₂)ₙ-OC(O)CHX₂, CH₃CX₂-CO₂-(CH₂)ₙ-OC(O)CX₂CH₃, XCH₂C(O)C(O)CH₂X, CH₃CHXC(O)C(O)CHXCH₃, XC(CH₃)₂C(O)C(O)CX(CH₃)₂, X₂CHC(O)C(O)CHX₂, CH₃CX₂C(O)C(O)CX₂CH₃, XCH₂-C(O)-CH₂X, CH₃-CHX-C(O)-CHX-CH₃, CX(CH₃)₂-C(O)- CX(CH₃)₂, X₂CH-C(O)-CHX₂, C₆H₅-CHX-(CH₂)ₙ-CHX-C₆H₅, C₆H₅-CX₂-(CH₂)ₙ-CX₂-C₆H₅, C₆H₅-CX₂-(CH₂)ₙ-CX₂-C₆H₅, o,-m- bzw. p-XCH₂-Ph-CH₂X, o,- m- bzw. p-CH₃CHX-Ph-CHXCH₃, o,- m- bzw. p-(CH₃)₂CX-Ph-CX(CH₃)₂, o,- m- bzw. p-CH₃CX₂-Ph-CX₂CH₃, o,- m- bzw. p-X₂CH-Ph-CHX₂, o,- m- bzw. p-XCH₂-CO₂-Ph-OC(O)CH₂X, o,- m- bzw. p-CH₃CHX-CO₂-Ph-OC(O)CHXCH₃, o,- m- bzw. p-(CH₃)₂CX-CO₂-Ph-OC(O)CX(CH₃)₂, CH₃CX₂-CO₂-Ph-OC(O)CX₂CH₃, o,- m- bzw. p-X₂CH-CO₂-Ph-OC(O)CHX₂ oder o,- m- bzw. p-XSO₂-Ph-SO₂X (X steht für Chlor, Brom oder Iod; Ph steht für Phenylen (C₆H₄); R repräsentiert einen aliphatischen Rest aus 1 bis 20 Kohlenstoffatomen, der linearer, verzweigter oder auch cyclischer Struktur sein kann, gesättigt oder einfach bzw. mehrfach ungesättigt sein kann und einen bzw. mehrere Aromaten enthalten kann oder aber aromatenfrei ist und n ist eine Zahl zwischen 0 und 20) werden. Vorzugsweise werden 1,4-Butandiol-di-(2-bromo-2-methylpropionat), 1,2-Ethylenglycol-di-(2-bromo-2-methylpropionat), 2,5-Dibrom-adipinsäure-di-ethylester oder 2,3-Dibrommaleinsäure-di-ethylester verwendet. Aus dem Verhältnis Initiator zu Monomer ergibt sich das spätere Molekulargewicht, falls das gesamte Monomer umgesetzt wird.

Katalysatoren für die ATRP sind in Chem.Rev. 2001, 101, 2921 aufgeführt. Es werden überwiegend Kupferkomplexe beschrieben - unter anderem kommen aber auch Eisen-, Rhodium-, Platin-, Ruthenium- oder Nickelverbindungen zur Anwendung. Allgemein können alle Übergangsmetallverbindungen verwendet werden, die mit dem Initiator, bzw. der Polymerkette, die eine übertragbare Atomgruppe aufweist, einen Redox-Zyklus bilden können. Kupfer kann dazu beispielsweise ausgehend von Cu₂O, CuBr, CuCl, Cul, CuN₃, CuSCN, CuCN, CuNO₂, CuNO₃, CuBF₄, Cu(CH₃COO) oder Cu(CF₃COO) dem System zugeführt werden.

Eine Alternative zu der beschriebenen ATRP stellt eine Variante derselben dar: In der so genannten reversen ATRP können Verbindungen in höheren Oxidationsstufen wie z.B. CuBr₂, CuCl₂, CuO, CrCl₃, Fe₂O₃ oder FeBr₃ eingesetzt werden. In diesen Fällen kann die Reaktion mit Hilfe klassischer Radikalbildner wie beispielsweise AIBN initiiert werden. Hierbei werden die Übergangsmetallverbindungen zunächst reduziert, da sie mit den aus den klassischen Radikalbildnern erzeugten Radikalen umgesetzt werden. Die reverse ATRP wurde u.a. von Wang und Matyjaszewski in Macromolekules (1995), Bd. 28, S. 7572ff beschrieben.

Eine Variante der reversen ATRP stellt der zusätzliche Einsatz von Metallen in der Oxidationsstufe null dar. Durch eine anzunehmende Komproportionierung mit den Übergangsmetallverbindungen der höheren Oxidationsstufe wird eine Beschleunigung der Reaktionsgeschwindigkeit bewirkt. Dieses Verfahren wird in WO 98/40415 näher beschrieben.

Das molare Verhältnis Übergangsmetall zu bifunktionellem Initiator liegt im Allgemeinen im Bereich von 0,02:1 bis 20:1, vorzugsweise im Bereich von 0,02:1 bis 6:1 und besonders bevorzugt im bereich von 0,2:1 bis 4:1, ohne dass hierdurch eine Beschränkung erfolgen soll.

Um die Löslichkeit der Metalle in organischen Lösungsmitteln zu erhöhen und gleichzeitig die Bildung stabiler und dadurch polymerisationsinaktiver Organometallverbindungen zu vermeiden, werden Liganden dem System zugegeben. Zusätzlich erleichtern die Liganden die Abstraktion der übertragbaren Atomgruppe durch die Übergangsmetallverbindung. Eine Auflistung bekannter Liganden findet sich beispielsweise in WO 97/18247, WO 97/47661 oder WO 98/40415. Als koordinativer Bestandteil weisen die als Ligand verwendeten Verbindungen zumeist ein oder mehrere Stickstoff-, Sauerstoff-, Phosphor- und/oder Schwefelatome auf. Besonders bevorzugt sind dabei stickstoffhaltige Verbindungen. Ganz besonders bevorzugt sind stickstoffhaltige Chelatliganden. Als Beispiele seien 2,2'-Bipyridin, N,N,N',N",N"-Pentamethyldiethylentriamin (PMDETA), Tris(2-aminoethyl)amin (TREN), N,N,N',N'-Tetramethylethylendiamin oder 1,1,4,7,10,10-Hexamethyltriethylentetramin aufgeführt. Wertvolle Hinweise zur Auswahl und Kombination der einzelnen Komponenten findet der Fachmann in WO 98/40415.

Diese Liganden können in situ mit den Metallverbindungen Koordinationsverbindungen bilden oder sie können zunächst als Koordinationsverbindungen hergestellt werden und anschließend in die Reaktionsmischung gegeben werden.

Das Verhältnis Ligand (L) zu Übergangsmetall ist abhängig von der Zähnigkeit des Liganden und der Koordinationszahl des Übergangsmetalls (M). Im Allgemeinen liegt das molare Verhältnis im Bereich 100:1 bis 0,1:1, vorzugsweise 6:1 bis 0,1:1 und besonders bevorzugt 3:1 bis 1:1, ohne dass hierdurch eine Beschränkung erfolgen soll.

Nach erfolgter ATRP kann die Übergangsmetallverbindung mittels Zugabe einer geeigneten Schwefelverbindung gefällt werden. Mittels Zugabe z.B. von Mercaptanen wird das kettenendständige Halogenatom unter Freisetzung eines Halogenwasserstoffs substituiert. Der Halogenwasserstoff - wie z.B.

HBr- protoniert den am Übergangsmetall koordinierten Liganden L zu einem Ammoniumhalogenid. Durch diesen Vorgang wird der Übergangsmetall-Ligand Komplex gequencht und das "nackte" Metall ausgefällt. Anschließend lässt sich die Polymerlösung leicht durch eine einfache Filtration reinigen. Bei besagten Schwefelverbindungen handelt es sich bevorzugt um Verbindungen mit einer SH-Gruppe. Ganz besonders bevorzugt handelt es sich um einen aus der freiradikalischen Polymerisation bekannten Regler wie Ethylhexylmercaptan oder n-Dodecylmercaptan. Zur Erhöhung des Silyl-Funktionalisierungsgrads können auch Silylmercaptane wie zum Beispiel 3-Mercaptopropyltrimethoxysilan, das als Dynasylan^{®} MTMO von der Firma Evonik AG bezogen werden kann, verwendet werden.

Es ergibt sich ein breites Anwendungsfeld für diese Produkte. Die Auswahl der Anwendungsbeispiele ist nicht dazu geeignet, die Verwendung der erfindungsgemäßen Polymere einzuschränken. Die Beispiele sollen einzig dazu dienen, stichprobenartig die breite Einsatzmöglichkeit der beschriebenen Polymere darzustellen. Bevorzugt werden Blockcopolymere der Zusammensetzung ABA, ACBCA, CABAC bzw. CDBDC als Präpolymere für eine feuchtigkeitshärtende Vernetzung. Die Präpolymere können mit beliebigen Polymeren vernetzt werden. Bei D-Blöcken handelt es sich um Polymerblöcke, die zum einen in der Grundzusammensetzung dem B-Block und nicht den C-Blöcken entsprechen und zum anderen silylfunktionelle Bausteine enthalten.

Die bevorzugten Anwendungen für die erfindungsgemäßen Blockcopolymeren der Zusammensetzung ABA, ACBCA, CDBDC oder CA'BA'C mit ≤4 Silylgruppen in den einzelnen A-, bzw. D-Blöcken sind in Dichtmassen, Reaktivschmelzklebstoffen oder in Klebmassen zu finden. Insbesondere bieten sich Verwendungen in Dichtmassen für Anwendungen in den Bereichen Fahrzeug-, Schiffs-, Container-, Maschinen- und Flugzeugbau, sowie in der Elektroindustrie und beim Bau von Haushaltsgeräten an. Weitere bevorzugte Anwendungsgebiete sind Dichtmassen für Bauanwendungen, Heißsiegelanwendungen oder Montagekleber.

Mit den neuen Bindemitteln lassen sich einkomponentige und zweikomponentige Elastomere zum Beispiel für eine der aufgeführten Anwendungen herstellen. Übliche Bestandteile einer Formulierung sind das Bindemittel, Lösungsmittel, Füllstoffe, Pigmente, Weichmacher, Stabilisierungsadditive, Wasserfänger, Haftvermittler, Thixotropiermittel, Vernetzungskatalysatoren, Klebrigmacher (Tackifier), usw.

Zur Reduktion der Viskosität können Lösungsmittel eingesetzt werden, z. B. aromatische Kohlenwasserstoffe (z. B. Toluol, Xylol, usw.), Ester (z. B. Ethylacetat, Butylacetat, Amylacetat, Cellosolveacetat, usw.), Ketone (z. B. Methylethylketon, Methylisobutylketon, Diisobutylketon, usw.), usw. Das Lösungsmittel kann bereits im Verlauf der radikalischen Polymerisation zugegeben werden.

Vernetzungskatalysatoren für hydrosilylierte Bindemittel in einer Formulierung zum Beispiel mit entsprechenden Polyurethanen sind die gängigen organischen Zinn-, Blei-, Quecksilber- und Wismutkatalysatoren, z. B. Dibutylzinndilaurat (z. B. von BNT Chemicals GmbH), Dibutylzinndiacetat, Dibutylzinndiketonat (z. B. Metatin 740 von Acima/Rohm + Haas), Dibutylzinndimaleat, Zinnnaphthenat, usw. Es können auch Umsetzungsprodukte von organischen Zinnverbindungen, z. B. Dibutylzinndilaurat mit Kieselsäureestern (z. B. DYNASIL A und 40), als Vernetzungskatalysatoren verwendet werden. Daneben auch Titanate (z. B. Tetrabutyltitanat, Tetrapropyltitanat, usw.), Zirkonate (z. B. Tetrabutylzirkonat, usw.), Amine (z. B. Butylamin, Diethanolamin, Octylamin, Morpholin, 1,3-Diazabicyclo[5.4.6]undezen-7 (DBU), usw.) bzw. deren Carbonsäuresalze, niedermolekulare Polyamide, Aminoorganosilane, Sulfonsäurederivate, und deren Mischungen. Der Anteil des Vernetzungskatalysators in der Formulierung beträgt bevorzugt 0.01 bis 20 Teile bezogen auf 100 Teile Bindemittel, besonders bevorzugt 0.01 bis 10 Teile.

Die im Folgenden gegebenen Beispiele werden zur besseren Veranschaulichung der vorliegenden Erfindung gegeben, sind jedoch nicht dazu geeignet, die Erfindung auf die hierin offenbarten Merkmale zu beschränken.

### Beispiele

Die zahlenmittleren bzw. gewichtsmittleren Molekulargewichte Mn bzw. Mw und die Molekulargewichtsverteilungen Mw/Mn werden durch GelpermeationsChromatographie (GPC) in Tetrahydrofuran gegenüber einem PMMA-Standard bestimmt.

### Beispiel 1

In einem mit Rührer, Thermometer, Rückflusskühler, Stickstoffeinleitungsrohr und Tropftrichter ausgestatteten Doppelmantelgefäß wurden unter N₂-Atmosphäre Monomer 1 a (genaue Bezeichnung und Mengenangabe in Tabelle 1), 125 mL Propylacetat, 0,5 g Kupfer(I)oxid und 1,3 g N,N,N',N",N"-Pentamethyldiethylentriamin (PMDETA) vorgelegt. Die Lösung wird für 15 min. bei 80 °C gerührt. Anschließend wird bei gleicher Temperatur in 25 mL Propylacetat gelöster Initiator 1,4-Butandiol-di-(2-bromo-2-methylpropionat) (BDBIB, Menge siehe Tabelle 1) zugetropft. Nach der Polymerisationszeit von drei Stunden wird eine Probe zur Bestimmung des mittleren Molgewichts Mₙ (mittels SEC) entnommen und eine Mischung aus Monomer 2a und Monomer 3a (genaue Bezeichnung und Mengenangabe in Tabelle 1) zugegeben. Die Mischung wird bis zu einem erwarteten Umsatz von mindestens 95% polymerisiert und durch Zugabe von 2,1 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt. Der Anteil an eingebautem Monomer 3a wird durch ¹H-NMR-Messungen quantifiziert.

### Beispiel 2

Analog dem Beispiel 1 werden die Monomere 1 b, 2b und 3b (genaue Bezeichnung und Mengenangabe in Tabelle 1) eingesetzt.

### Beispiel 3

Analog dem Beispiel 1 werden die Monomere 1 c, 2c und 3c (genaue Bezeichnung und Mengenangabe in Tabelle 1) eingesetzt.

### Beispiel 4

Analog dem Beispiel 1 werden die Monomere 1d, 2d und 3d (genaue Bezeichnung und Mengenangabe in Tabelle 1) eingesetzt.

**Tabelle 1**

| Beispiel | 1 (Vergleich) | 2 | 3 (Vergleich) | 4 |
|---|---|---|---|---|
| Monomer 1 | 1a) MMA | 1b)n-BA | 1c)n-BA | 1d) MMA |
| Menge | 81,0 g | 79,6 g | 79,6 g | 81,1 g |
| Monomer 2 | 2a) MMA | 2b) MMA | 2c) n-BA | 2d) n-BA |
| Menge | 19,9 g | 19,9 g | 20,0 g | 20,1 g |
| Monomer 3 | 3a) MEMO | 3b) MEMO | 3c) MEMO | 3d) MEMO |
| Menge | 4,8 g | 4,8 g | 4,8 g | 4,8 g |
| Initiatormenge | 1,25 g | 1,25 g | 1,25 g | 1,25 g |
| Mₙ(1.Sufe) | 21600 | 17800 | 18100 | 20400 |
| D | 1,21 | 1,22 | 1,28 | 1,26 |
| Mₙ (Endprodukt) | 26800 | 20300 | 22500 | 23100 |
| D | 1,31 | 1,36 | 1,38 | 1,40 |

| | | | | |
|---|---|---|---|---|
| MMA = Methylmethacrylat; n-BA = n-Butylacrylat, MEMO = Dynasylan MEMO (3-Methacryloxypropyltrimethoxysilan) | | | | |

Während die Molekulargewichtsverteilungen der ersten Stufe monomodal sind, zeigen die Verteilungen der Endstufen eine mehr oder weniger stark ausgeprägte hochmolekulare Schulter. Diese sind auf Nebenreaktionen der Silylgruppen unter einer teilweise stattfindenden Kettendimerisierung zurückzuführen. Nach Entfernung des Lösungsmittels können die Produkte durch Zugabe geeigneter Trocknungsmittel stabilisiert werden. Auf diese Weise lässt sich eine gute Lagerstabilität ohne weitere Molekulargewichtszunahme gewährleisten.

### Beispiel 5

In einem mit Rührer, Thermometer, Rückflusskühler, Stickstoffeinleitungsrohr und Tropftrichter ausgestatteten Doppelmantelgefäß wurden unter N₂-Atmosphäre Monomer Ia (genaue Bezeichnung und Mengenangabe in Tabelle 2), 145 mL Propylacetat, 0,62 g Kupfer(I)oxid und 1,6 g N,N,N',N",N"-Pentamethyldiethylentriamin (PMDETA) vorgelegt. Die Lösung wird für 15 min. bei 80 °C gerührt. Anschließend wird bei gleicher Temperatur in 30 mL Propylacetat gelöster Initiator 1,4-Butandiol-di-(2-bromo-2-methylpropionat) (BDBIB, Menge siehe Tabelle 1) zugetropft. Nach der Polymerisationszeit von drei Stunden wird eine Probe zur Bestimmung des mittleren Molgewichts Mₙ (mittels SEC) entnommen und Monomer IIa (genaue Bezeichnung und Mengenangabe in Tabelle 2) beigefügt. Nach einem errechneten 95%igen Umsatz wird schließlich eine Mischung aus Monomer IIa' und Monomer IIIa (genaue Bezeichnung und Mengenangabe in Tabelle 2) zugegeben. Die Mischung wird bis zu einem erwarteten Umsatz von mindestens 95% polymerisiert und durch Zugabe von 2,4 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt. Der Anteil an eingebautem Monomer IIIa wird durch ¹H-NMR-Messungen quantifiziert.

### Beispiel 6

In einem mit Rührer, Thermometer, Rückflusskühler, Stickstoffeinleitungsrohr und Tropftrichter ausgestatteten Doppelmantelgefäß wurden unter N₂-Atmosphäre Monomer Ib (genaue Bezeichnung und Mengenangabe in Tabelle 2), 150 mL Propylacetat, 0,60 g Kupfer(I)oxid und 1,6 g N,N,N',N",N"-Pentamethyldiethylentriamin (PMDETA) vorgelegt. Die Lösung wird für 15 min. bei 80 °C gerührt. Anschließend wird bei gleicher Temperatur in 35 mL Propylacetat gelöster Initiator 1,4-Butandiol-di-(2-bromo-2-methylpropionat) (BDBIB, Menge siehe Tabelle 1) zugetropft. Nach der Polymerisationszeit von drei Stunden wird eine Probe zur Bestimmung des mittleren Molgewichts Mₙ (mittels SEC) entnommen und eine Mischung aus Monomer IIb und Monomer IIIb (genaue Bezeichnung und Mengenangabe in Tabelle 2) beigefügt. Nach einem errechneten 95%igen Umsatz wird schließlich Monomer IIb' (genaue Bezeichnung und Mengenangabe in Tabelle 2) zugegeben. Die Mischung wird bis zu einem erwarteten Umsatz von mindestens 95% polymerisiert und durch Zugabe von 2,4 g n-Dodecylmercaptan abgebrochen. Die Lösung wird durch Filtration über Kieselgel und die anschließende Entfernung volatiler Bestandteile mittels Destillation aufgearbeitet. Das mittlere Molekulargewicht wird abschließend durch SEC-Messungen bestimmt. Der Anteil an eingebautem Monomer 3a wird durch ¹H-NMR-Messungen quantifiziert.

**Tabelle 2**

| Beispiel | 5 | 6 |
|---|---|---|
| Monomer I | Ia) n-BA | Ib) n-BA |
| Menge | 95,2 g | 96,5 g |
| Monomer II | IIa) MMA | IIb) MMA |
| Menge | 19,8 g | 4,2 g |
| Monomer II' | IIa') MMA | IIb') MMA |
| Menge | 4,0 g | 19,8 g |
| Monomer III | IIIa) MEMO | IIIb) MEMO |
| Menge | 5,9 g | 5,0 g |
| Initiatormenge | 1,70 g | 1,62 g |
| Mₙ(1.Sufe) | 17800 | 26700 |
| D | 1,22 | 1,31 |
| Mₙ (2.Sufe) | 21600 | 30500 |
| D | 1,23 | 1,47 |
| Mₙ (3. Stufe)¹ | 23400 | 32000 |
| D | 1,36 | 1,63 |

| | | |
|---|---|---|
| MMA = Methylmethacrylat; n-BA = n-Butylacrylat, MEMO = Dynasylan MEMO (3-Methacryloxypropyltrimethoxysilan); ¹GPC-Messungen der dritten Stufe vor Zugabe des Mercaptans | | |

Auch bei den Pentablockcopolymeren nimmt die Molekulargewichtsverteilungen nach der Dynasylan^{®} MEMO enthaltenen Polymerisationsstufen zu und im Eluogram ist eine mehr oder weniger stark ausgeprägte hochmolekulare Schulter feststellbar.

## Patentansprüche

1. Blockcopolymere der Zusammensetzung ABA mit mindestens 1 und maximal 4 Silylgruppen pro einzelnem A-Block, **dadurch gekennzeichnet,**
**dass** Block A, ein Copolymer enthaltend silyl-funktionalisierte (Meth)acrylate und nicht silyl-funktionelle Monomere ausgewählt aus der Gruppe der (Meth)acrylate oder deren Mischungen und ein
Block B, enthaltend (Meth)acrylate oder deren Mischungen, die keine zusätzliche Silylfunktion aufweisen und deren Zusammensetzung sich von der Zusammensetzung der nicht silyl-funktionellen Monomere aus Block A unterscheidet,
als ABA-Blockcopolymerisate polymerisiert werden.

2. Blockcopolymere gemäß Anspruch 1, **dadurch gekennzeichnet, dass** die einzelnen A-Blöcke der ABA-Blockcopolymere eine Zusammensetzung mit mindestens 1 und maximal 2 Silylgruppen aufweisen.

3. Blockcopolymere gemäß Anspruch 1 oder 2, **dadurch gekennzeichnet, dass** die einzelnen A-Blöcke jeweils weniger als 25% des Gesamtgewichts des ABA-Blockcopolymers ausmachen.

4. Blockcopolymere gemäß Anspruch 3, **dadurch gekennzeichnet, dass** die einzelnen A-Blöcke jeweils weniger als 10% des Gesamtgewichts des ABA-Blockcopolymers ausmachen.

5. Blockcopolymere gemäß Anspruch 1 bis 4, **dadurch gekennzeichnet, dass** die einzelnen B-Blöcke wiederum in sich eine CDC-Triblockstruktur aufweisen können und somit zu ACDCA-Pentablockcopolymeren führen.

6. Blockcopolymere gemäß Anspruch 5, **dadurch gekennzeichnet, dass** die Zusammensetzung der C-Blöcke der Zusammensetzung des nicht silylfunktionalisierten Anteils in den A-Blöcken entspricht.

7. Blockcopolymere gemäß Anspruch 1, **dadurch gekennzeichnet, dass** die einzelnen A-Blöcke wiederum in sich eine CA'-Diblockstruktur aufweisen können, die Blöcke A' und Monomere ausgewählt aus der Gruppe der (Meth)acrylate oder deren Mischungen enthalten, die C-Blöcke keine silylfunktionalisierte (Meth)acrylate enthalten, ansonsten der Zusammensetzung der A'-Blöcke entsprechen und somit zu CA'BA'C-Pentablockcopolymeren führen.

8. Blockcopolymere gemäß Anspruch 1, **dadurch gekennzeichnet, dass** die zur Funktionalisierung der A-Segmente eingesetzten Monomere eine ungesättigte, radikalisch polymerisierbare Gruppe und eine Silylgruppe enthalten, und dass die zusätzliche Silylgruppe die Form
-Si(OR¹)_{b}R²ₐX_{c}
aufweist, wobei die organischen Resten R¹ bzw. R² jeweils identisch oder verschieden zueinander sind und ausgewählt aus der Gruppe der aliphatischen Kohlenwasserstoffreste bestehend aus 1 bis 20 Kohlenstoffatomen die linear, verzweigt oder cyclisch sind, R¹ kann dabei auch ausschließlich Wasserstoff sein,
X ausgewählt aus der Gruppe der hydrolisierbaren Reste, die ungleich Alkoxy bzw. Hydroxy sind,
a, b und c jeweils ganze Zahlen zwischen 0 und 3 sind und die Summe von a, b und c 3 ergibt.

9. Verfahren zur Herstellung von Blockcopolymeren der Zusammensetzung ABA mit ≤4 Silylgruppen in den einzelnen A-Blöcken, **dadurch gekennzeichnet,**
**dass** die Blöcke A erhalten werden aus einer Mischung aus silylfunktionalisierten (Meth)acrylaten und Monomeren ausgewählt aus der Gruppe der (Meth)acrylate oder deren Mischungen,
und **dass** der Block B erhalten wird aus (Meth)acrylaten oder deren Mischungen, die keine zusätzliche Silylfunktionalität aufweisen,
mittels einer sequentiell durchgeführten Atom Transfer Radical Polymerization (ATRP) in Anwesenheit eines Initiators und eines Katalysators in einem halogenfreien Lösungsmittel.

10. Verfahren zur Herstellung von Blockcopolymeren gemäß Anspruch 9, **dadurch gekennzeichnet, dass** es sich bei dem Initiator um einen bifunktionellen Initiator handelt.

11. Verfahren zur Herstellung von Blockcopolymeren gemäß Anspruch 9 bis 10, **dadurch gekennzeichnet, dass** als Katalysator Übergangsmetallverbindungen, bevorzugt Kupferverbindungen, und dass als Ligand N-haltige Chelatliganden verwendet werden.

12. Verfahren zur Herstellung von Blockcopolymeren gemäß Anspruch 9, **dadurch gekennzeichnet, dass** das Blockcopolymer ein zahlenmittleres Molekulargewicht zwischen 5000 g/mol und 100000 g/mol aufweist.

13. Verfahren zur Herstellung von Blockcopolymeren gemäß Anspruch 9, **dadurch gekennzeichnet, dass** das Blockcopolymer bevorzugt ein zahlenmittleres Molekulargewicht zwischen 7500 g/mol und 50000 g/mol aufweist.

14. Verfahren zur Herstellung von Blockcopolymeren gemäß Anspruch 9, **dadurch gekennzeichnet, dass** das Blockcopolymer eine Molekulargewichtsverteilung kleiner 1,6 aufweist.

15. Verfahren zur Herstellung von Pentablockcopolymeren gemäß Anspruch 9, **dadurch gekennzeichnet, dass** der Katalysator nach der Polymerisation mittels Zugabe eines Mercaptans oder einer eine Thiolgruppe aufweisenden Verbindung gefällt und mittels Filtration von der Polymerlösung abgetrennt wird.

16. Verwendung von Blockcopolymeren der Zusammensetzung ABA mit ≤4 silylfunktionalisierten Gruppen in den einzelnen A-Blöcken, **dadurch gekennzeichnet,**
**dass** Block A, ein Copolymer enthaltend silyl-funktionalisierte (Meth)acrylate und Monomere ausgewählt aus der Gruppe der (Meth)acrylate oder deren Mischungen und ein
Block B, enthaltend (Meth)acrylate oder deren Mischungen, die keine Silylfunktion aufweisen und deren Zusammensetzung sich von der Zusammensetzung der nicht silyl-funktionellen Monomere aus Block A unterscheidet,
als ABA-Blockcopolymerisate polymerisiert werden,
in Reaktivschmelzklebstoffen, in Klebmassen oder in Dichtmassen

17. Verwendung von Blockcopolymeren der Zusammensetzung ABA mit ≤4 silylfunktionalisierten Gruppen in den einzelnen A-Blöcken, **dadurch gekennzeichnet,**
**dass** Block A, ein Copolymer enthaltend silyl-funktionalisierte (Meth)acrylate und Monomere ausgewählt aus der Gruppe der (Meth)acrylate oder deren Mischungen und ein
Block B, enthaltend (Meth)acrylate oder deren Mischungen, die keine Silylfunktion aufweisen und deren Zusammensetzung sich von der Zusammensetzung der nicht silyl-funktionellen Monomere aus Block A unterscheidet,
als ABA-Blockcopolymerisate polymerisiert werden,
in Heißsiegelanwendungen.

## Claims

1. Block copolymers of the composition ABA having at least 1 and at most 4 silyl groups per individual A block, **characterised in that**
block A, a copolymer containing silyl-functionalised (meth)acrylates and non-silyl-functional monomers selected from the group of (meth)acrylates or mixtures thereof, and a
block B containing (meth)acrylates or mixtures thereof which comprise no additional silyl function and the composition of which differs from the composition of the non-silyl-functional monomers from block A,
are polymerised as ABA block copolymers.

2. Block copolymers according to claim 1, **characterised in that** the individual A blocks of the ABA block copolymers have a composition with at least 1 and at most 2 silyl groups.

3. Block copolymers according to claim 1 or claim 2, **characterised in that** the individual A blocks in each case constitute less than 25% of the total weight of the ABA block copolymer.

4. Block copolymers according to claim 3, **characterised in that** the individual A blocks in each case constitute less than 10% of the total weight of the ABA block copolymer.

5. Block copolymers according to claims 1 to 4, **characterised in that** the individual B blocks may in turn themselves have a CDC triblock structure and so give rise to ACDCA pentablock copolymers.

6. Block copolymers according to claim 5, **characterised in that** the composition of the C blocks corresponds to the composition of the nonsilyl-functionalised moiety in the A blocks.

7. Block copolymers according to claim 1, **characterised in that** the individual A blocks may in turn themselves have a CA' diblock structure, the blocks contain A' and monomers selected from the group of (meth)acrylates or mixtures thereof, and the C blocks do not contain any silyl-functional (meth)acrylates but otherwise correspond to the composition of the A' blocks and thus give rise to CA'BA'C pentablock copolymers.

8. Block copolymers according to claim 1, **characterised in that** the monomers used for functionalising the A segments contain an unsaturated, free-radically polymerisable group and a silyl group, and **in that** the additional silyl group has the form
-Si(OR¹)_{b}R²ₐX_{c}
wherein the organic residues R¹ or R² are in each case identical or different from one another and are selected from the group of aliphatic hydrocarbon residues consisting of 1 to 20 carbon atoms which are linear, branched or cynic, R¹ may here also be exclusively hydrogen,
X is selected from the group of hydrolysable residues which are neither alkoxy nor hydroxy,
a, b and c are in each case integers between 0 and 3 and the sum of a, b and c amounts to 3.

9. A method for producing block copolymers of the composition ABA having ≤4 silyl groups in the individual A blocks, **characterised in that**
the A blocks are obtained from a mixture of silyl-functionalised (meth)acrylates and monomers selected from the group of (meth)acrylates or mixtures thereof,
and **in that** the B block is obtained from (meth)acrylates or mixtures thereof which have no additional silyl functionality,
by means of a sequentially performed atom-transfer radicalpolymerisation (ATRP) in the presence of an initiator and a catalyst in a halogen-free solvent.

10. A method for producing block copolymers according to claim 9, **characterised in that** the initiator is a difunctional initiator.

11. A method for producing block copolymers according to claims 9 to 10, **characterised in that** transition metal compounds, preferably copper compounds, are used as the catalyst and **in that** nitrogenous chelate ligands are used as the ligand.

12. A method for producing block copolymers according to claim 9, **characterised in that** the block copolymer has a number-average molecular weight of between 5000 g/mol and 100000 g/mol.

13. A method for producing block copolymers according to claim 9, **characterised in that** the block copolymer preferably has a number-average molecular weight of between 7500 g/mol and 50000 g/mol.

14. A method for producing block copolymers according to claim 9, **characterised in that** the block copolymer has a molecular weight distribution of less than 1.6.

15. A method for producing pentablock copolymers according to claim 9, **characterised in that**, after polymerisation, the catalyst is precipitated by addition of a mercaptan or a compound comprising a thiol group and is separated from the polymer solution by filtration.

16. Use of block copolymers of the composition ABA having ≤4 silylfunctionalised groups in the individual A blocks, **characterised in that**
block A, a copolymer containing silyl-functionalised (meth)acrylates and monomers selected from the group of (meth)acrylates or mixtures thereof, and a
block B containing (meth)acrylates or mixtures thereof which comprise no silyl function and the composition of which differs from the composition of the non-silyl-functional monomers from block A,
are polymerised as ABA block copolymers,
in reactive hot-melt adhesives, in adhesive compositions or in sealants.

17. Use of block copolymers of the composition ABA having ≤4 silylfunctionalised groups in the individual A blocks, **characterised in that**
block A, a copolymer containing silyl-functionalised (meth)acrylates and monomers selected from the group of (meth)acrylates or mixtures thereof, and a
block B containing (meth)acrylates or mixtures thereof which comprise no silyl function and the composition of which differs from the composition of the non-silyl-functional monomers from block A,
are polymerised as ABA block copolymers, in heat-sealing applications.

## Revendications

1. Copolymères séquence de composition ABA comprenant au moins 1 et au maximum 4 groupes silyle par séquence A individuelle, **caractérisés en ce qu'**on polymérise
une séquence A, à savoir un copolymère contenant des (méth)acrylates à fonctionnalité silyle et des monomères non à fonctionnalité silyle choisis parmi le groupe des (méth)acrylates ou de leurs mélanges ; et une séquence B contenant des (méth)acrylates ou leurs mélanges, qui ne présentent pas de fonction silyle supplémentaire et dont la composition se distingue de la composition des monomères non à fonctionnalité silyle de la séquence A,
sous la forme de copolymères séquencés ABA.

2. Copolymères séquencés selon la revendication 1, **caractérisés en ce que** les séquences individuelles A des copolymères séquencés ABA présentent une composition comprenant au moins 1 et au maximum 2 groupes silyle.

3. Copolymères séquencés selon la revendication 1 ou 2, **caractérisés en ce que** les séquences individuelles A représentent respectivement moins de 25 % du poids total du copolymère séquencé ABA.

4. Copolymères séquencés selon la revendication 3, **caractérisés en ce que** les séquences individuelles A représentent respectivement moins de 10 % du poids total du copolymère séquencé ABA.

5. Copolymères séquencés selon les revendications 1 à 4, **caractérisés en ce que** les séquences individuelles B peuvent présenter à leur tour en soi une structure triséquencée CDC pour ainsi donner lieu à des copolymères pentaséquencés ACDCA.

6. Copolymères séquencés selon la revendication 5, **caractérisés en ce que** la composition des séquences C correspond à la composition de la fraction non à fonctionnalité silyle dans les séquences A.

7. Copolymères séquencés selon la revendication 1, **caractérisés en ce que** les séquences individuelles A peuvent présenter à leur tour en soi une structure diséquencée CA' qui contient des séquences A' et des monomères choisis parmi le groupe des (méth)acrylates ou de leurs mélanges, les séquences C ne contenant pas de (méth)acrylates à fonctionnalité silyle et correspondant pour le reste à la composition des séquences A', pour ainsi donner lieu à des copolymères pentaséquencés CA'BA'C.

8. Copolymères séquencés selon la revendication 1, **caractérisés en ce que**, les monomères mis en oeuvre pour la fonctionnalisation des segments A contiennent un groupe insaturé apte à une polymérisation radicalaire et un groupe silyle, et **en ce que** le groupe silyle supplémentaire présente la forme
**-Si(OR¹)_{b}R²ₐX_{c}**
dans laquelle les résidus organiques R¹, respectivement R² sont à chaque fois identiques ou différents l'un de l'autre et sont choisis parmi le groupe des résidus d'hydrocarbures aliphatiques constitués par de 1 à 20 atomes de carbone, qui sont linéaires, ramifiés ou cycliques, R¹ pouvant représenter en l'occurrence également de manière exclusive un atome d'hydrogéne ;
X est choisi parmi le groupe des résidus hydrolysables qui ne représentent pas un groupe alcoxy, respectivement un groupe hydroxyle ;
a, b et c représentent à chaque fois des nombres entiers entre 0 et 3 et la somme de a, b et c s'élève à 3.

9. Procédé pour la préparation de copolymères séquencés possédant la composition ABA avec ≤ 4 groupes silyle dans les séquences A individuelles, **caractérisé**
**en ce qu'**on obtient les séquences A à partir d'un mélange de (méth)acrylates à fonctionnalité silyle et de monomères choisis parmi le groupe des (méth)acrylates ou de leurs mélanges ;
et **en ce qu'**on obtient la séquence B à partir de (méth)acrylates ou de leurs mélanges, qui ne présentent pas une fonctionnalité silyle supplémentaire ;
au moyen d'une polymérisation radicalaire par transfert d'atomes (ATRP) mise en oeuvre de manière séquentielle, en présence d'un initiateur et d'un catalyseur dans un solvant exempt d'halogène.

10. Procédé pour la préparation de copolymères séquencés selon la revendication 9, **caractérisé en ce que**, en ce qui concerne l'initiateur, il s'agit d'un initiateur difonctionnel.

11. Procédé pour la préparation de copolymères séquencés selon la revendication 9 à 10, **caractérisé en ce qu'**on utilise à titre de catalyseur, des composés de métaux de transition, de préférence des composés de cuivre, et **en ce qu'**on utilise à titre de ligand des ligands de chélation azotés.

12. Procédé pour la préparation de copolymères séquencés selon la revendication 9, **caractérisé en ce que** le copolymère séquencé présente un poids moléculaire moyen en nombre entre 5.000 g/mol et 100.000 g/mol.

13. Procédé pour la préparation de copolymères séquencés selon la revendication 9, **caractérisé en ce que** le copolymère séquencé présente de préférence un poids moléculaire moyen en nombre entre 7.500 g/mol et 50.000 g/mol.

14. Procédé pour la préparation de copolymères séquencés selon la revendication 9, **caractérisé en ce que** le copolymère séquencé présente une distribution du poids moléculaire inférieure à 1,6.

15. Procédé pour la préparation de copolymères pentaséquencés selon la revendication 9, **caractérisé en ce que** le catalyseur, après la polymérisation, est précipité par addition d'un mercaptan ou d'un composé présentant un groupe thiol et est séparé de la solution polymère par filtration.

16. Utilisation de copolymères séquencés de composition ABA avec ≤ 4 groupes à fonctionnalité silyle dans les séquences A individuelles, **caractérisée en ce qu'**on polymérise
une séquence A, à savoir un copolymère contenant des (méth)acrylates à fonctionnalité silyle et des monomères choisis parmi le groupe des (méth)acrylates ou de leurs mélanges ; et
une séquence B contenant des (méth)acrylates ou leurs mélanges, qui ne présentent pas de fonction silyle et dont la composition se distingue de la composition des monomères non à fonctionnalité silyle de la séquence A,
sous la forme de copolymères séquencés ABA,
dans des adhésifs fusibles réactifs, dans des matières de collage ou dans des matières d'étanchéité.

17. Utilisation de copolymères séquences de composition ABA avec ≤ 4 groupes à fonctionnalité silyle dans les séquences A individuelles, **caractérisée en ce qu'**on polymérise
une séquence A, à savoir un copolymère contenant des (méth)acrylates à fonctionnalité silyle et des monomères choisis parmi le groupe des (méth)acrylates ou de leurs mélanges ; et
une séquence B contenant des (méth)acrylates ou leurs mélanges, qui ne présentent pas de fonction silyle et dont la composition se distingue de la composition des monomères non à fonctionnalité silyle de la séquence A,
sous la forme de copolymères séquencés ABA,
dans des applications de thermosoudage.
